# EUROPÄISCHE PATENTSCHRIFT

(11) **EP 2 443 853 B1**
(45) Veröffentlichungstag und Bekanntmachung des Hinweises auf die Patenterteilung: **10.08.2016**
(21) Anmeldenummer: 10722138.4
(22) Anmeldetag: 09.06.2010
(51) Int. Cl.: H04W 12/06, H04L 29/06, H04W 8/06

(54) **VERFAHREN ZUM EINBUCHEN EINES MOBILFUNKGERÄTS IN EIN MOBILFUNKNETZ**
METHOD FOR REGISTRATION OF A MOBILE DEVICE IN A MOBILE NETWORK
MÉTHODE DE REGISTRATION D'UN TERMINALE MOBILE DANS UN RÉSEAU SANS FIL

(30) Priorität: 16.06.2009 DE 102009026953
(43) Veröffentlichungstag der Anmeldung: 25.04.2012
(73) Patentinhaber: Bundesdruckerei GmbH, 10958 Berlin (DE)
(72) Erfinder: KÜTER, Joachim, 10179 Berlin (DE); LOER, Thomas, 10961 Berlin (DE); LANGEN, Kirsten, 10178 Berlin (DE)
(74) Vertreter: Richardt Patentanwälte PartG mbB
(86) Internationale Anmeldenummer: PCT/EP2010/058093
(87) Internationale Veröffentlichungsnummer: WO 2010/145979

(56) Entgegenhaltungen:
- WO-A1-2005/119931
- WO-A2-2008/110597
- US-A1- 2006 205 388
- "Universal Mobile Telecommunications System (UMTS); 3G security; Security architecture (3GPP TS 33.102 version 7.1.0 Release 7); ETSI TS 133 102" ETSI STANDARDS, LIS, SOPHIA ANTIPOLIS CEDEX, FRANCE, Bd. 3-SA3, Nr. V7.1.0, 1. Dezember 2006 (2006-12-01), XP014040243 ISSN: 0000-0001

## Beschreibung

Die Erfindung betrifft ein Verfahren zum Einbuchen eines Mobilfunkgeräts in ein Mobilfunknetz, ein Computerprogrammprodukt, einen ID-Token und ein Mobilfunksystem.

Nach dem GSM-Standard erfolgt das Einbuchen eines Mobilfunkgeräts in ein GSM-Mobilfunknetz mit Hilfe der International Mobile Subscriber Identity (IMSI). Die IMSI ist in dem Subscriber Identity Module (SIM) gespeichert. Durch die IMSI wird das Home Location Register (HLR) identifiziert, in welches die Einbuchung erfolgen muss. In analoger Art und Weise erfolgt auch das Einbuchen nach dem UMTS-Standard und anderen Mobilfunkstandards.

Aus US 2007/0294431 A1 ist ein Verfahren zur Verwaltung der digitalen Identitäten bekannt, welches eine Nutzerregistrierung erfordert.

Ferner sind Token-basierte Authentifizierungsverfahren beispielsweise aus US 2001/0045451 A1 und US 6 257 486 B1 sowie der WO 2005/119931 A1 bekannt.

Weitere Token-basierte Authentifizierungsverfahren sind in den zum Anmeldezeitpunkt unveröffentlichten Patentanmeldungen DE 10 2008 000 067.1-31, DE 10 2008 040 416.0-31 und DE 10 2008 042 262.2-31 derselben Patentanmelderin offenbart.

Der Erfindung liegt die Aufgabe zugrunde, ein verbessertes Verfahren zum Einbuchen eines Mobilfunkgeräts in ein Mobilfunknetz, ein Computerprogramm, einen ID-Token und ein Mobilfunksystem zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung erfolgt das Einbuchen eines Mobilfunkgeräts in ein Mobilfunknetz mit Hilfe zumindest eines in einem ID-Token gespeicherten Attributs, wobei der ID-Token einem Nutzer zugeordnet ist, mit folgenden Schritten: Authentifizierung des Nutzers gegenüber dem ID-Token, Herstellung einer Verbindung zwischen dem ID-token und einem ersten Computersystem über das Mobilfunkgerät und das Mobilfunknetz, Authentifizierung des ersten Computersystems gegenüber dem ID-Token, nach erfolgreicher Authentifizierung des Nutzers und des ersten Computersystems gegenüber dem ID-Token, Lesezugriff des ersten Computersystems auf das zumindest eine in dem ID-Token gespeicherte Attribut über die Verbindung, Verwendung des zumindest einen Attributs für das Einbuchen. Ausführungsformen der Erfindung sind besonders vorteilhaft, da für das Einbuchen des Mobilfunkgeräts keine SIM-Karte erforderlich ist, sondern ein dem Nutzer zugeordneter ID-Token, bei dem es sich zum Beispiel um ein Ausweisdokument, insbesondere einen elektronischen Personalausweis, des Nutzers handeln kann. Wenn der Nutzer über einen solchen ID-Token verfügt, wird also nicht zusätzlich eine SIM-Karte benötigt, um das Mobilfunkgerät des Nutzers in das Mobilfunknetz einzubuchen. Damit entfällt auch der technische, logistische und finanzielle Aufwand für die Herstellung, Personalisierung und Distribution der SIM-Karten an die Nutzer. Von weiterem besonderem Vorteil ist, dass ein neu hinzukommender Nutzer, d.h. ein sogenannter Subscriber, sofort sein Mobilfunkgerät in das Mobilfunknetz einbuchen kann, ohne auf die Zusendung einer SIM-Karte warten zu müssen.

Ausführungsformen der Erfindung ermöglichen das Lesen eines oder mehrerer der in einem ID-Token gespeicherten Attribute durch das erste Computersystem, wobei die Verbindung zwischen dem ID-Token und dem ersten Computersystem über das Mobilfunknetz, insbesondere das Internet, aufgebaut werden kann. Bei dem zumindest einem Attribut kann es sich um eine Angabe bezüglich der Identität des dem ID-Token zugeordneten Nutzers handeln, insbesondere bezüglich dessen so genannter digitaler Identität. Beispielsweise werden durch das erste Computersystem die Attribute Name, Vorname, Adresse gelesen, um diese Attribute an ein zweites Computersystem, zum Beispiel eine Mobilfunknetzkomponente des Mobilfunknetzes, insbesondere eine zentrale Datenbank oder ein Home Location Register (HLR) weiterzuleiten.

Nach einer Ausführungsform der Erfindung handelt es sich bei dem in dem ID-Token gespeicherten Attribut um einen Identifikator. Der Identifikator kann so ausgebildet sein, dass er den Nutzer und zusätzlich ein für diesen Nutzer zuständiges Home Location Register des Mobilfunknetzes eindeutig identifiziert. Insbesondere Unter einem "Home Location Register" wird hier jede Netzwerkkomponente eines Mobilfunknetzes verstanden, die zum Einbuchen von Mobilfunkgeräten in das Mobilfunknetz dient.

Unter dem Vorgang der "Einbuchung" eines Mobilfunkgeräts in ein Mobilfunknetz wird hier jeder Vorgang verstanden, bei dem die Identität eines Nutzers des Mobilfunkgeräts an das Mobilfunknetz kommuniziert wird, sodass der Nutzer mit Hilfe seines Mobilfunkgeräts als aktiver Teilnehmer registriert wird, der zum Beispiel Sprachanrufe tätigen oder empfangen kann, Nachrichten senden oder empfangen kann und/oder andere über das Mobilfunknetz angebotene Dienste in Anspruch nehmen kann, wie zum Beispiel das Herunterladen von Daten über das Mobilfunknetz.

Bei dem ID-Token kann es sich um ein tragbares elektronisches Gerät z.B. in Form eines so genannten USB-Stick, handeln oder um ein Dokument, insbesondere ein Wert- oder Sicherheitsdokument.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten oder sonstige Berechtigungsnachweise, in die ein Datenspeicher zur Speicherung des zumindest einen Attributs integriert ist

Ausführungsformen der Erfindung sind also besonders vorteilhaft, da das zumindest eine Attribut aus einem besonders vertrauenswürdigen Dokument, beispielsweise einem amtlichen Dokument, ausgelesen wird. Die Erfindung ermöglicht also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Nach einer Ausführungsform der Erfindung hat das erste Computersystem zumindest ein Zertifikat, welches zur Authentifizierung des ersten Computersystems gegenüber dem ID-Token verwendet wird. Das Zertifikat beinhaltet eine Angabe derjenigen Attribute, für welche das erste Computersystem eine Leseberechtigung hat. Der ID-Token prüft anhand dieses Zertifikats, ob das erste Computersystem die erforderliche Leseberechtigung für den Lesezugriff auf das Attribut hat, bevor ein solcher Lesezugriff durch das erste Computersystem durchgeführt werden kann.

Nach einer Ausführungsform der Erfindung sendet das erste Computersystem das zumindest eine von dem ID-Token ausgelesene Attribut unmittelbar an ein zweites Computersystem. Bei dem zweiten Computersystem kann es sich zum Beispiel um eine Mobilfunknetzkomponente des Mobilfunknetzes handeln, durch welche das Einbuchen erfolgt.

Nach einer Ausführungsform der Erfindung erfolgt die Übertragung der aus dem ID-Token gelesenen Attribute von dem ersten Computersystem zunächst an das Mobilfunkgerät des Nutzers.

Nach einer Ausführungsform der Erfindung werden die aus dem ID-Token ausgelesenen Attribute von dem ersten Computersystem signiert und dann an das Mobilfunkgerät übertragen. Der Nutzer des Mobilfunkgeräts kann die Attribute also lesen, ohne sie jedoch verändern zu können. Erst nach Freigabe durch den Nutzer werden die Attribute von dem Mobilfunkgerät an das zweite Computersystem weitergeleitet.

Nach einer Ausführungsform der Erfindung kann der Nutzer die Attribute vor deren Weiterleitung durch weitere Daten ergänzen, beispielsweise um Attribute, die für die Erbringung eines von dem Nutzer gewünschten über das Mobilfunknetz zu erbringenden Dienstes erforderlich sind.

Nach einer Ausführungsform der Erfindung handelt es sich bei dem Mobilfunkgerät um ein Mobiltelefon, insbesondere ein Smartphone, einen Personal Digital Assistant mit einer Mobilfunk-Schnittstelle, einen tragbaren Computer mit einer Mobilfunk-Schnittstelle oder ein anderes tragbares elektronisches Gerät (" electronic applicance"), wie z.B. eine digitale Kamera, mit einer Mobilfunk-Schnittstelle.

Nach einer Ausführungsform der Erfindung sind die identifikatoren, wie zum Beispiel die IMSIs der Nutzer, in einer Datenbank gespeichert. Mit dem zumindest einen aus dem ID-Token ausgelesenen Attribut wird auf die Datenbank zugegriffen, um den dem Nutzer zugeordneten Identifikator aus der Datenbank auszulesen. Durch den Identifikator wird auch das für den Nutzer zuständige Home Location Register identifiziert. In diesem für den Nutzer zuständigen Home Location Register wird dann das Mobilfunkgerät des Nutzers eingebucht. Der Nutzer kann danach mit seinem Mobilfunkgerät beliebige Anrufe über das Mobilfunknetz tätigen oder empfangen oder das Mobilfunknetz für andere Zwecke nutzen, wie zum Beispiel zum Herunterladen von Daten oder anderen Online-Dienste, wie zum Beispiel die Nutzung des Internets.

Nach einer Ausführungsform der Erfindung ist in der Datenbank auch die dem Nutzer zugeordnete Telefonnummer gespeichert. Mit Hilfe des zumindest einen Attributs wird also nicht nur der Identifikator, sondern auch die dem Nutzer zugeordnete Telefonnummer aus der Datenbank ausgelesen. Diese Telefonnummer wird dann an das durch den Identifikator identifizierte Home Location Register, das für den Nutzer zuständig ist, übertragen, und dort zumindest für die Zeitdauer, während derer das Mobilfunkgerät in dem Mobilfunknetz eingebucht ist, gespeichert. Die Telefonnummer kann aber auch permanent in dem für den Nutzer zuständigen Home Location Register gespeichert werden.

Von besonderem Vorteil ist dabei, dass die Telefonnummer nicht durch den Betreiber des Mobilfunknetzes vorgegeben sein muss, sondern dass der Nutzer seine Telefonnummer selbst bestimmen kann, sofern die gewünschte Telefonnummer nichts bereits vergeben ist. Die von dem Nutzer gewünschte Telefonnummer wird in die Datenbank und/oder das zuständige HLR eingegeben und gespeichert, womit sie dann für das Weitere festgelegt ist. Die Eintragung der Telefonnummer in die Datenbank und/oder das zuständige HLR kann seitens des Nutzers zum Beispiel über eine von dem Betreiber des Mobilfunknetzes zur Verfügung gestellte Internetplattform erfolgen.

Nach einer Ausführungsform der Erfindung ist ein erster Identifikator in dem Mobilfunkgerät des Nutzers gespeichert. Mit Hilfe eines Datenbankzugriffs wird ein zweiter Identifikator aus der Datenbank ausgelesen, wobei als Schlüssel für den Datenbankzugriff das zumindest eine aus dem ID-Token des Nutzers ausgelesene Attribut dient. Die ersten und zweiten Identifikatoren werden dann netzwerkseitig miteinander verglichen. Wenn die beiden Identifikatoren übereinstimmen, erfolgt die Einbuchung des Mobilfunkgeräts, in dem durch die ersten und zweiten Identifikatoren identifizierten Home Location Register, das für den Nutzer zuständig ist.

Nach einer Ausführungsform der Erfindung handelt es sich bei dem zumindest einem Attribut, das in dem ID-Token gespeichert ist, um einen Identifikator, durch den der Nutzer eindeutig identifiziert ist, sowie auch das für den Nutzer zuständige Home Location Register des Mobilfunknetzes. Beispielsweise ist der Identifikator als IMSI ausgebildet. Das erste Computersystem übergibt den aus dem ID-Token ausgelesenen Identifikator an das zuständige Home Location Register, welches durch den Identifikator identifiziert ist, sodass das Einbuchen des Mobilfunkgeräts des betreffenden Nutzers durch dieses Home Location Register erfolgen kann.

Nach einer Ausführungsform der Erfindung erfolgt die Kommunikation zwischen dem Mobilfunkgerät und dem ID-Token kontaktlos, insbesondere mittels eines RFID oder eines Near Field Communication (NFC)-Standards. Vorzugsweise liegt die Reichweite des für den Datenaustausch zwischen dem Mobilfunkgerät und dem ID-Token verwendeten Kommunikationsverfahrens im Bereich von weniger als 50 cm, insbesondere im Bereich von höchstens 30 cm. Der Datenaustausch zwischen dem Mobilfunkgerät und dem ID-Token mit Hilfe von Funksignalen, insbesondere nach einem RFID oder einem NFC-Standard, hat für den Nutzer besondere Handhabungsvorteile.

Beispielsweise führt der Nutzer den ID-Token in einer Tasche, insbesondere einer Brieftasche, mit sich. Zum Einbuchen seines Mobilfunkgeräts muss der Nutzer den ID-Token nicht aus der Tasche nehmen, da dies für die Kommunikation mittels Funksignalen nicht erforderlich ist. Aufgrund der geringen Reichweite des für den Datenaustausch verwendeten Kommunikationsverfahrens ist gleichzeitig sichergestellt, dass die Kommunikation nicht zwischen dem Mobilfunkgerät des Nutzers und dem ID-Token eines anderen Nutzers, der sich in der Nähe befindet, erfolgt.

In einem weiteren Aspekt betrifft die Erfindung ein Computerprogrammprodukt mit von einem Computersystem ausführbaren Instruktionen zur Durchführung eines erfindungsgemäßen Verfahrens. Das Computerprogrammprodukt kann modular aufgebaut sein, sodass bestimmte Module von dem ersten Computersystem und andere Module von dem zweiten Computersystem ausgeführt werden.

In einem weiteren Aspekt betrifft die Erfindung einen ID-Token, wie zum Beispiel ein Ausweisdokument, insbesondere einen elektronischen Personalausweis, mit einem geschützten Speicherbereich zur Speicherung von zumindest einem Attribut, Mitteln zur Authentifizierung eines dem ID-Token zugeordneten Nutzers gegenüber dem ID-Token, Mitteln zur Authentifizierung eines ersten Computersystems gegenüber dem ID-Token, Mitteln zum Aufbau einer geschützten Verbindung zu dem ersten Computersystem über ein Mobilfunkgerät, wobei das erste Computersystem das zumindest eine Attribut über die geschützte Verbindung auslesen kann, wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist, und wobei durch das zumindest eine Attribut ein Home Location Register eines Mobilfunknetzes identifizierbar ist.

In einem weiteren Aspekt betrifft die Erfindung ein Mobilfunksystem zum Einbuchen eines Mobilfunkgeräts in ein Mobilfunknetz mit Hilfe zumindest eines in einem ID-Token gespeicherten Attributs, wobei der ID-Token einem Nutzer zugeordnet ist, mit Mittel zur Herstellung einer Verbindung zwischen dem ID-Token und einem ersten Computersystem über das Mobilfunkgerät und das Mobilfunknetz, Mitteln zur Authentifizierung des ersten Computersystems gegenüber dem ID-Token, Mitteln zur Durchführung eines Lesezugriffs des ersten Computersystems auf das zumindest eine in dem ID-Token gespeicherte Attribut über die Verbindung, wobei der Lesezugriff durchführbar ist, nachdem sich der Nutzer und das erste Computersystem gegenüber dem ID-Token authentifiziert haben, und Mitteln zur Verwendung des zumindest einen Attributs für das Einbuchen.

Nach einer Ausführungsform der Erfindung hat der ID-Token Mittel für eine Ende-zu-Ende-Verschlüsselung. Dies erlaubt es, die Verbindung zwischen dem ID-Token und dem ersten Computersystem über das Mobilfunkgerät des Nutzers aufzubauen, da der Nutzer aufgrund der Ende-zu-Ende-Verschlüsselung keine Änderungen der über die Verbindung übertragenen Daten vornehmen kann.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen ID-Tokens und eines erfindungsgemäßen Mobilfunksystems,
- Figur 2: ein Flussdiagramm einer Ausführungsform eines erfindungsgemäßen Verfahrens,
- Figur 3: ein UML-Diagramm einer Ausführungsform eines erfindungsgemäßen Verfahrens,
- Figur 4: ein Blockdiagramm einer weiteren Ausführungsform eines erfindungsgemäßen ID-Tokens und eines erfindungsgemäßen Mobilfunksystems,
- Figur 5: ein Blockdiagramm einer weiteren Ausführungsform eines erfindungsgemäßen ID-Tokens und eines erfindungsgemäßen Mobilfunksystems,
- Figur 6: ein Blockdiagramm einer weiteren Ausführungsform eines erfindungsgemäßen ID-Tokens und eines erfindungsgemäßen Mobilfunksystems.

Elemente der nachfolgenden Ausführungsformen, die einander entsprechen, werden mit denselben Bezugszeichen gekennzeichnet.

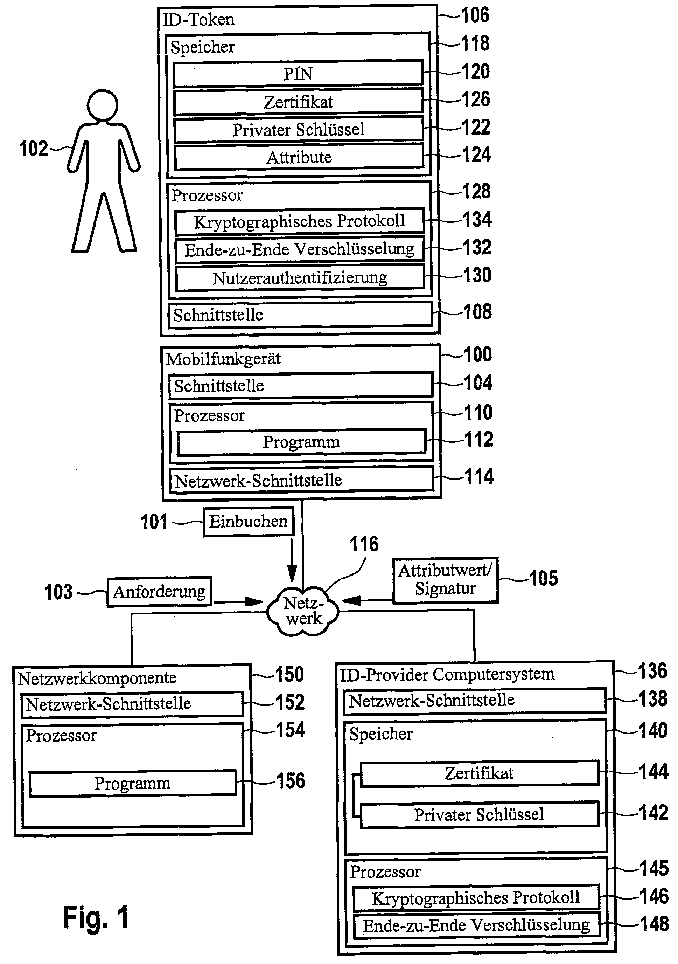

Die Figur 1 zeigt ein Mobilfunkgerät 100 eines Nutzers 102. Bei dem Mobilfunkgerät 100 kann es sich um einen tragbaren Computer, wie zum Beispiel einen Laptop oder Palmtop-Computer, einen Personal Digital Assistant, ein mobiles Telekommunikationsgerät, insbesondere ein Mobiltelephon, ein Smart Phone, oder dergleichen handeln. Das Mobilfunkgerät 100 hat eine Schnittstelle 104 zur Kommunikation mit einem ID-Token 106, der eine entsprechende Schnittstelle 108 aufweist. Bei der Schnittstelle 104 kann es sich um eine Funkschnittstelle, insbesondere eine RFID- oder eine NFC-Schnittstelle, handeln.

Insbesondere kann es sich bei dem ID-Token 106 um ein Dokument, insbesondere ein Wert- oder Sicherheitsdokument handeln, wie zum Beispiel um ein maschinenlesbares Reisedokument (MRTD), wie zum Beispiel einen elektronischen Reisepass oder einen elektronischen Personalausweis, oder um ein Zahlungsmittel, wie zum Beispiel eine Kreditkarte.

Das Mobilfunkgerät 100 hat zumindest einen Prozessor 110 zur Ausführung von Programminstruktionen 112 sowie eine Mobilfunknetz-Schrüttstelle 114 zur Kommunikation über ein Mobilfunknetz 116. Bei dem Mobilfunknetz kann es sich um ein GSM, UMTS, CDMA 2000 Netz oder ein Mobilfunknetz nach einem anderen Mobilfunkstandard handeln, wie zum Beispiel 3GPP Long Term Evolution oder 4G.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, eine Passnummer oder eine Kreditkartennummer.

Alternativ oder zusätzlich kann in dem Speicherbereich 124 ein Identifikator gespeichert sein, durch den der Nutzer 102, dem der ID-Token 106 zugeordnet ist, eindeutig identifiziert ist. Durch den Identifikator kann ferner eine Netzwerkkomponente 150 des Mobilfunknetzes 116 identifiziert sein. Durch diese Netzwerkkomponente 150 wird das Einbuchen des Mobilfunkgeräts 100 in das Mobilfunknetz 116 veranlasst oder durchgeführt. Insbesondere kann der Identifikator als IMSI ausgebildet sein. Insbesondere kann der Identifikator als mehrstellige Nummer ausgebildet sein, wobei vorbestimmte Stellen dieser mehrstelligen Nummer eine HLR-Nummer bilden, durch die das für den Nutzer 102 zuständige HLR identifiziert ist.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Mobilfunkgerät 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Mobilfunkgerät 100 angeschlossen oder in dieses integriert. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-EndeVerschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Alternativ zu der in der Figur 1 dargestellten Ausführungsform kann das Mobilfunkgerät 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Computersystem 136 hat eine Mobilfunknetz-Schnittstelle 138 zur Kommunikation über das Mobilfunknetz 116 oder mit einer Netzwerkkomponente des Mobilfunknetz 116, insbesondere über das sog. Backbone oder das core network des Mobilfunknetz 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist Prinzipiell kann jedes an sich vorbekannte Verfahren zur Vereinbarung des symmetrischen Schlüssels für die Ende-zu-Ende-Verschlüsselung verwendet werden, wie zum Beispiel ein Diffie-HallmanSchlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Nach einer weiteren Ausführungsform der Erfindung kann das ID-Provider-Computersystem 136 auch einen integralen Bestandteil der Netzwerkkomponente 150 bilden.

Die Netzwerkkomponente 150 kann als Home Location Register ausgebildet sein oder die Netzwerkkomponente 150 kann zur Interaktion mit den Home Location Registers des Mobilfunknetzes 116 ausgebildet sein, um das Einbuchen von Mobilfunkgeräten vorzunehmen oder zu veranlassen.

Die Netzwerkkomponente 150 hat eine Mobilfunknetz-Schnittstelle 152 zur Verbindung mit dem Mobilfunknetz 116 oder mit einer anderen Netzwerkkomponente des Mobilfunknetz 116, insbesondere über das sog. Backbone oder das core network des Mobilfunknetz 116. Insbesondere die Kommunikation zwischen der Netzwerkkomponente 150 und dem ID-Provider-Computersystem 136 kann über das Backbone oder das core network des Mobilfunknetz 116 erfolgen.

Ferner hat die Netzwerkkomponente 150 zumindest einen Prozessor 154 zur Ausführung von Programminstruktionen 156. Durch Ausführung der Programminstruktionen 156 erfolgt die Einbuchung z.B. des Mobilfunkgeräts in das Mobilfunknetz 116 anhand des zumindest einen Attributs oder die Einbuchung wird hierdurch initiiert.

Zum Einbuchen des Mobilfunkgeräts 100 in das Mobilfunknetz 116 wird wie folgt vorgegangen:

### 1. Authentifizierung des Nutzers 102 gegenüber dem ID-Token 106.

Der Nutzer 102 authentifiziert sich gegenüber dem ID-Token 106. Bei einer Implementierung mit PIN gibt der Nutzer 102 hierzu seine PIN beispielsweise über das Mobilfunkgerät 100 oder einen daran angeschlossenen oder integrierten Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.

### 2. Authentifizierung des ID-Provider-Computersystems 136 gegenüber dem ID-Token 106.

Hierzu wird eine Verbindung zwischen dem ID-Token 106 und dem ID-Provider-Computersystem 136 über das Mobilfunkgerät 100 und das Mobilfunknetz 116 hergestellt. Beispielsweise überträgt das ID-Provider-Computersystem 136 sein Zertifikat 144 über diese Verbindung an den ID-Token 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.

### 3. Auslesen des zumindest einen Attributs

Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erhält das ID-Provider-Computersystem 136 eine Leseberechtigung zum Auslesen, eines, mehrerer oder aller der in dem geschützten Speicherbereich 124 gespeicherten Attribute. Aufgrund eines entsprechenden Lesekommandos, welches das ID-Provider Computersystem 136 über die Verbindung an den ID-Token 106 sendet, werden die angeforderten Attribute aus dem geschützten Speicherbereich 124 ausgelesen und durch Ausführung der Programminstruktionen 132 verschlüsselt. Die verschlüsselten Attribute werden über die Verbindung an das ID-ProviderComputersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Attribute.

Diese Attribute werden von dem ID-Provider-Computersystem mit Hilfe seines Zertifikats 144 signiert und über das Mobilfunkgerät 100 oder direkt an die Netzwerkkomponente 150 übertragen. Dadurch wird die Netzwerkkomponente 150 über die aus dem ID-Token 106 ausgelesenen Attribute in Kenntnis gesetzt, sodass das Netzwerkkomponente 150 das Mobilfunkgerät 100 anhand dieser Attribute in das Mobilfunknetz 116 einbuchen kann oder die Einbuchung 5 anhand der Attribute veranlassen kann.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Netzwerkkomponente 150 sicher sein kann, dass die ihm von dem ID-Provider-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der ID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Zum Einbuchen des Mobilfunkgeräts 100 kann das Mobilfunkgerät 100 beispielsweise ein Signal 101 über seine Netzwerk-Schnittstelle 114 an das Mobilfunknetz 116 senden. Die Versendung dieses Signals 101 ist auch bereits dann möglich, wenn das Mobilfunkgerät 100 nicht in dem Mobilfunknetz 116 eingebucht ist.

Das Signal 101 wird von der Netzwerkkomponente 150 des Mobilfunknetzes 116 verarbeitet, indem die Netzwerkkomponente 150 eine Anforderung 103 an das ID-Provider-Computersystem 136 richtet. Aufgrund dieser Anforderung 103 liest das ID-Provider-Computersystem 136 zumindest einen Attributwert aus dem ID-Token 106, nachdem die Authentifizierung des Nutzers 102 und des ID-Provider-Computersystems 136 erfolgt ist. Das ID-Provider-Computersystem 136 antwortet dann auf die Anforderung 103 mit einer Nachricht 105, die den zumindest einen Attributwert und dessen Signatur beinhaltet. Diese Nachricht wird von der Netzwerkkomponente 150 oder einer anderen Netzwerkkomponente des Mobilfunknetzes 116 empfangen und für das Einbuchen des Mobilfunkgeräts 100 des Nutzers 102 verwendet.

Die Kommunikation zwischen dem ID-Token 106 und dem ID-Provider-Computersystem 136 kann auch bereits vor dem Einbuchen des Mobilfunkgeräts 100 über das Mobilfunknetz 116 erfolgen. Beispielsweise wird hierzu dem Mobilfunkgerät 100 aufgrund des Empfangs des Signals 101 seitens des Mobilfunknetzwerks 116 eine temporäre Kennung zugeordnet, die für die Kommunikation über das Mobilfunknetz 116 mit dem Mobilfunkgerät 100 verwendet wird, so lange das Mobilfunkgerät 100 noch nicht eingebucht ist.

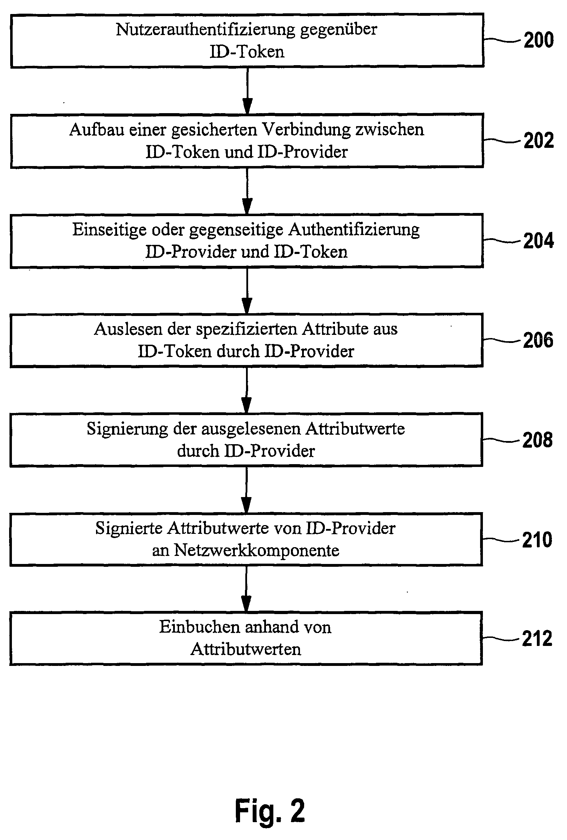

Die Figur 2 zeigt eine Ausführungsform eines erfindungsgemäßen Verfahrens.

Zum Einbuchen des Mobilfunkgeräts 100 des Nutzers 102 mit Hilfe von dessen ID-Token 106 wird beispielsweise wie folgt vorgegangen: In dem Schritt 200 authentifiziert sich der Nutzer gegenüber dem ID-Token. Dies kann so erfolgen, dass der Nutzer über eine Tastatur des Mobilfunkgeräts seine PIN eingibt, die von dem Mobilfunkgerät über dessen Schnittstelle an die Schnittstelle des ID-Tokens übertragen wird. Wenn die Authentifizierung des Nutzers gegenüber dem ID-Token erfolgreich war, so wird in dem Schritt 202 eine Verbindung zwischen dem ID-Token und dem ID-Provider-Computersystem aufgebaut.

Hierbei handelt es sich vorzugsweise um eine gesicherte Verbindung, beispielsweise nach einem so genannten Secure Messaging-Verfahren.

In dem Schritt 204 erfolgt zumindest eine Authentifizierung des ID-Provider-Computersystems gegenüber dem ID-Token über die in dem Schritt 202 aufgebaute Verbindung. Zusätzlich kann eine Authentifizierung auch des ID-Tokens gegenüber dem ID-Provider-Computersystem vorgesehen sein.

Nachdem sowohl der Nutzer als auch das ID-Provider-Computersystem erfolgreich gegenüber dem ID-Token authentifiziert worden sind, erhält das ID-Provider-Computersystem von dem ID-Token die Zugriffsberechtigung zum Auslesen zumindest einer der Attribute. In dem Schritt 206 sendet das ID-Provider-Computersystem ein oder mehrere Lesekommandos zum Auslesen der erforderlichen Attribute aus dem ID-Token. Die Attribute werden dann mittels Ende-zu-Ende-Verschlüsselung über die gesicherte Verbindung an das ID-Provider-Computersystem übertragen und dort entschlüsselt.

Die ausgelesenen Attributwerte werden in dem Schritt 208 von dem ID-Provider-Computersystem signiert. In dem Schritt 210 sendet das ID-Provider-Computersystem die signierten Attributwerte an eine Netzwerkkomponente. Die Übertragung des oder der Attributwerte kann über das Mobilfunknetz erfolgen. Alternativ ist das ID-Provider-Computersystem Teil der Netzwerkkomponente, so dass keine Übertragung erforderlich ist.

Die signierten Attributwerte erreichen die Netzwerkkomponente entweder direkt oder über das Mobilfunkgerät. Im letzteren Fall kann der Nutzer die Möglichkeit haben, die signierten Attributwerte zur Kenntnis zu nehmen und/oder durch weitere Daten zu ergänzen. Es kann vorgesehen sein, dass die signierten Attributwerte gegebenenfalls mit den ergänzten Daten erst nach Freigabe durch den Nutzer von dem Mobilfunkgerät an die Netzwerkkomponente weitergeleitet werden. Hierdurch ist größtmögliche Transparenz für den Nutzer hinsichtlich der von dem ID-Provider-Computersystem an die Netzwerkkomponente gesendeten Attribute hergestellt.

In dem Schritt 212 wird dann das Mobilfunkgerät durch die Netzwerkkomponente anhand der aus dem ID-Token ausgelesenen Attributwerte in das Mobilfunknetz eingebucht.

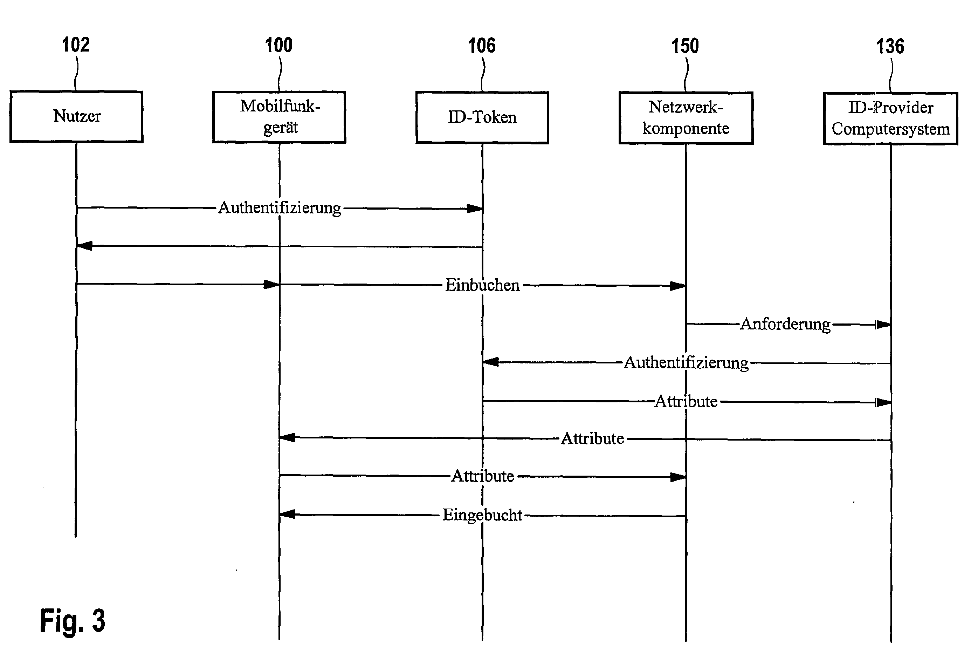

Die Figur 3 zeigt eine weitere Ausführungsform eines erfindungsgemäßen Verfahrens.

Zum Einbuchen seines Mobilfunkgeräts 100 in das Mobilfunknetz 116 authentifiziert sich der Nutzer 102 zunächst gegenüber dem ID-Token 106. Nach erfolgreicher Authentifizierung des Nutzers 102 gegenüber dem ID-Token 106 sendet das Mobilfunkgerät 100 über das Mobilfunknetz 116 ein Signal an die Netzwerkkomponente 150 des Mobilfunknetzes, um gegenüber dem Mobilfunknetz zu signalisieren, dass das Mobilfunkgerät 100 in das Mobilfunknetz eingebucht werden soll.

Die Netzwerkkomponente 150 sendet daraufhin eine Anforderung an das ID-Provider-Computersystem 136. Diese Anforderung kann über das Mobilfunknetz 116 gesendet werden. Die Anforderung kann auch unmittelbar von der Netzwerkkomponente 150 an das ID-Provider-Computersystem 136 kommuniziert werden, insbesondere dann, wenn es sich bei dem ID-Provider-Computersystem 136 um einen integralen Bestandteil der Netzwerkkomponente 150 handelt.

Aufgrund der von der Netzwerkkomponente 150 empfangenen Anforderung authentifiziert sich das ID-Provider-Computersystem 136 gegenüber dem ID-Token 106 und richtet eine Leseanforderung zum Lesen eines oder mehrerer der Attribute an den ID-Token 106.

Unter der Voraussetzung der vorherigen erfolgreichen Authentifizierung des Nutzers 102 und des ID-Provider-Computersystems 136 antwortet der ID-Token 106 auf die Leseanforderung mit den gewünschten Attributen. Das ID-Provider-Computersystem 136 signiert die Attribute und sendet die signierten Attribute an das Mobilfunkgerät 100. Nach Freigabe durch den Nutzer 102 am Mobilfunkgerät 100 werden die signierten Attribute dann an die Netzwerkkomponente 150 übertragen. Die Netzwerkkomponente 150 veranlasst dann die Einbuchung des Mobilfunkgeräts 100.

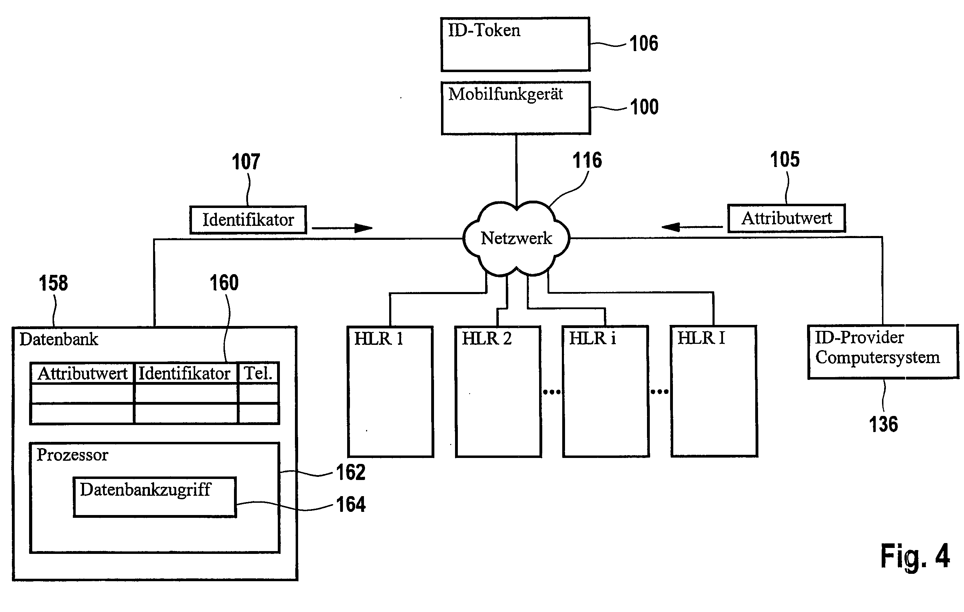

Die Figur 4 zeigt eine Ausführungsform eines erfindungsgemäßen Mobilfunksystems mit einer Datenbank 158. Die Datenbank 158 beinhaltet zumindest eine Datenbanktabelle 160, in der für jeden registrierten Nutzer des Mobilfunknetzwerks 116 ein eindeutiger Identifikator und eine Telefonnummer gespeichert ist. Zum Auslesen des Identifikators und der Telefonnummer des Nutzers 102 ist die Kenntnis zumindest eines Attributwerts erforderlich, der aus dem ID-Token 106 des Nutzers 102 von dem ID-Provider-Computersystem 136 ausgelesen werden muss.

Die Datenbank 158 hat zumindest einen Prozessor 162 zur Ausführung von Programminstruktionen 164. Durch die Ausführung der Programminstruktionen 164 kann ein Zugriff auf die Datenbanktabelle 160 erfolgen, um mit Hilfe des aus dem ID-Token 106 des Nutzers 102 ausgelesenen Attributwerts den Identifikator und die Telefonnummer des Nutzers 102 auszulesen.

Durch den Identifikator wird nicht nur der Nutzer 102 eindeutig identifiziert, sondern auch ein für den Nutzer 102 zuständiges Home Location Register. In der hier betrachteten Ausführungsform hat das Mobilfunknetz 116 eine Anzahl I von Home Location Registern HLR1, HLR2,..., HLRi, .... HLRI.

Die für jeden der registrierten Nutzer des Mobilfunknetzwerks 116 in der Datenbanktabelle 160 gespeicherten Identifikatoren können beispielsweise als IMSIs ausgebildet sein.

Zum Einbuchen des Mobilfunkgeräts 100 wird bei der hier betrachteten Ausführungsform so vorgegangen, dass zumindest ein Attributwert aus dem ID-Token 106 von dem ID-Provider-Computersystem 136 ausgelesen wird, nachdem sich der Nutzer 102 und das ID-Provider-Computersystem 136 gegenüber dem ID-Token 106 authentifiziert haben, beispielsweise so wie mit Bezug auf die Figuren 1, 2 und 3 oben beschrieben. Das ID-Provider-Computersystem 136 sendet dann die Nachricht 105 mit dem Attributwert an die Datenbank 158. Durch Ausführung der Programminstruktionen 164 wird dann mit Hilfe des Attributwerts ein Datenbankzugriff durchgeführt, um aus der Datenbanktabelle 160 unter Verwendung des Attributwerts als Schlüssel den dem Nutzer 102 zugeordneten Identifikator und die Telefonnummer des Nutzers 102 auszulesen. Die Datenbank 158 sendet dann eine Nachricht 107, um diesen Identifikator und die Telefonnummer des Nutzers 102 gegenüber dem Mobilfunknetz 116 mitzuteilen. Die Nachricht 107 wird von dem durch den Identifikator identifizierten Home Location Register empfangen, welches daraufhin das Mobilfunkgerät 100 einbucht.

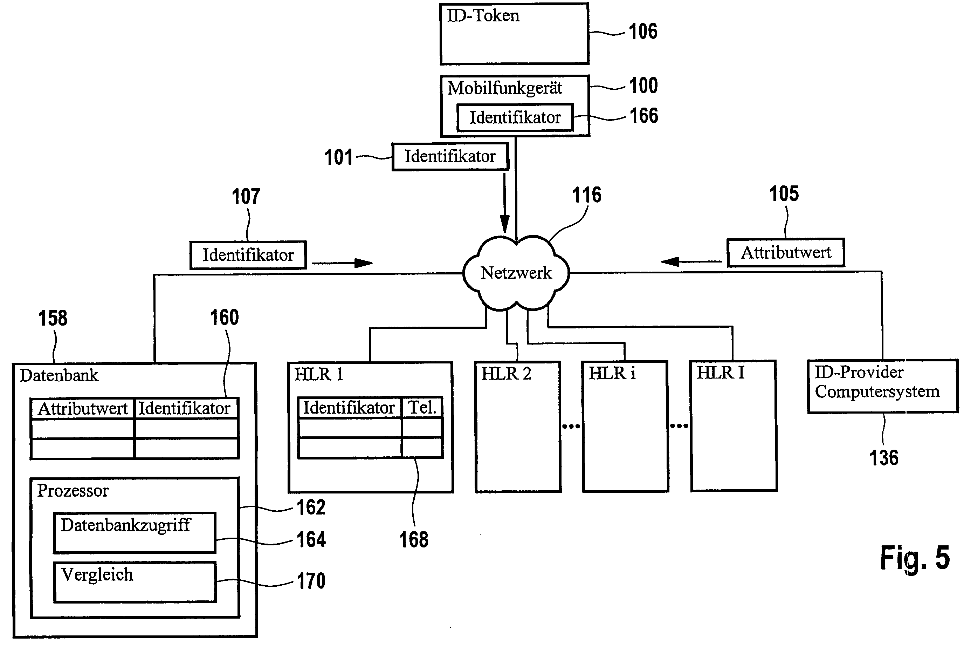

Die Figur 5 zeigt eine alternative Ausführungsform, bei der der Identifikator in einem Speicher 166 des Mobilfunkgeräts 100 gespeichert ist. Dieser Identifikator kann beispielsweise von dem Nutzer 102 manuell in das Mobilfunkgerät 100 eingegeben werden, sodass er in dem Speicher 166 gespeichert wird. Alternativ kann der Identifikator mit Hilfe einer Over-the-Air (OTA) Technik automatisch in den Speicher 166 des Mobilfunkgeräts 100 geschrieben werden.

Ergänzend zu der Ausführungsform gemäß Figur 4 sendet das Mobilfunkgerät 100 zur Durchführung der Einbuchung den in seinem Speicher 166 gespeicherten Identifikator über das Mobilfunknetz 116 an die Datenbank 158.

In der Datenbanktabelle 160 sind in der hier betrachteten Ausführungsform nur die Identifikatoren, nicht aber die Telefonnummern gespeichert. Die Telefonnummern der registrierten Nutzer sind dagegen in lokalen Datenbanken der einzelnen Home Location Register gespeichert. Die Figur 5 zeigt exemplarisch die Datenbank 168 des Home Location Registers 1, in der die Telefonnummern derjenigen registrierten Nutzer gespeichert sind, für die das Home Location Register 1 zuständig ist. Ein Zugriff auf diese Telefonnummer kann mit den Identifikatoren der betreffenden Nutzer erfolgen.

Der Prozessor 162 der Datenbank 158 dient bei der hier betrachteten Ausführungsform zusätzlich zur Ausführung von Programminstruktionen 170. Durch Ausführung der Programminstruktionen 170 wird überprüft, ob der von dem Mobilfunkgerät 100 empfangene Identifikator Identisch ist mit dem aus der Datenbanktabelle 160 ausgelesenen ldentifikator. Nur wenn dies der Fall ist, sendet die Datenbank 158 die Nachricht 107, andernfalls wird die Einbuchung abgelehnt.

Für die Einbuchung des Mobilfunkgeräts 100 wird hier also wie folgt vorgegangen:
Das Mobilfunkgerät 100 sendet das Signal 101 an das Mobilfunknetz 116, wobei das Signal 101 bei dieser Ausführungsform den in dem Speicher 166 gespeicherten Identifikator trägt. Das ID-Provider-Computersystem 136 liest den zumindest einen Attributwert aus dem ID-Token 106, nachdem sich der Nutzer 102 und das ID-Provider-Computersystem 136 gegenüber dem ID-Token 106 authentifiziert haben, wie oben mit Bezugnahme auf die Figuren 1 bis 4 erläutert. Das ID-Provider-Computersystem 136 sendet dann die Nachricht 105 mit dem Attributwert an die Datenbank 158.

Durch Ausführung der Programminstruktionen 164 liest die Datenbank 158 aus der Datenbanktabelle 160 den Identifikator des Nutzers 102 mit Hilfe des Attributwerts aus. Ferner überprüft die Datenbank 158 durch Ausführung der Programminstruktionen 170, ob der von dem Mobilfunkgerät 100 empfangene Identifikator mit dem aus der Datenbanktabelle 160 ausgelesenen Identifikator übereinstimmt. Nur wenn dies der Fall ist, sendet die Datenbank 158 die Nachricht 107 ab, sodass die Einbuchung in dem zuständigen Home Location Register, wie zum Beispiel dem Home Location Register 1, erfolgen kann. Das zuständige Home Location Register greift mit dem Identifikator als Schlüssel auf seine lokale Datenbank 168 zu, um die Telefonnummer des Nutzers 102 zu ermitteln. Für die so ermittelte Telefonnummer wird dann die Einbuchung in das Mobilfunknetz vorgenommen.

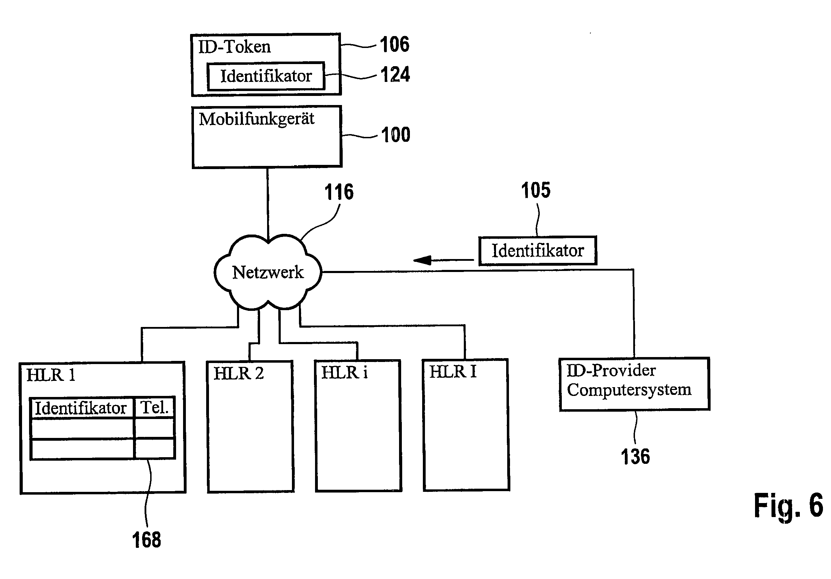

Die Figur 6 zeigt eine weitere Ausführungsform eines erfindungsgemäßen Mobilfunksystems. Bei dieser Ausführungsform ist der Identifikator, also beispielsweise die IMSI, des Nutzers 102 als Attributwert in dem geschützten Speicherbereich 124 des ID-Tokens 106 gespeichert.

Zum Einbuchen des Mobilfunkgeräts 100 wird dann so vorgegangen, dass das ID-Provider-Computersystem 136 den Identifikator aus dem ID-Token 106 ausliest, nachdem sich der Nutzer 102 und das ID-Provider-Computersystem 136 gegenüber dem ID-Token 106 authentfiziert haben, analog zu den oben beschriebenen Ausführungsformen der Figuren 1 bis 5. Das ID-Provider-Computersystem 136 sendet dann die Nachricht 105 mit dem Identifikator, die das durch den Identifikator identifizierte Home Location Register des Mobilfunknetzes 116 empfängt, wie zum Beispiel das HLR1. Das zuständige Home Location Register führt einen Datenbankzugriff auf seine lokale Datenbank 168 durch, um mit dem in der Nachricht 105 beinhalteten Identifikator die Telefonnummer des Nutzers 102 zu ermitteln, mit der die Einbuchung des Mobilfunkgeräts 100 dann erfolgt.

### Bezugszeichenliste

- 100: Mobilfunkgerät
- 101: Signal
- 102: Nutzer
- 103: Anforderung
- 104: Schnittstelle
- 105: Nachricht
- 106: ID-Token
- 107: Nachricht
- 108: Schnittstelle
- 110: Prozessor
- 112: Programminstruktionen
- 114: Mobilfunknetz-Schnittstelle
- 116: Mobilfunknetz
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Mobilfunknetz-Schnittstelle
- 140: Speicher
- 142: privater Schlüssel
- 144: Zertifikat
- 145: Prozessor
- 146: Programminstruktionen
- 148: Programminstruktionen
- 149: Programminstruktionen
- 150: Netzwerkkomponente
- 152: Mobilfunknetz-Schnittstelle
- 154: Prozessor
- 156: Programminstruktionen
- 158: Datenbank
- 160: Datenbanktabelle
- 162: Prozessor
- 164: Programminstruktionen
- 166: Speicher
- 168: Datenbank
- 170: Programminstruktionen

## Patentansprüche

1. Verfahren zum Einbuchen eines Mobilfunkgeräts (100) in ein Mobilfunknetz (116) mit Hilfe zumindest eines in einem externen ID-Token (106) gespeicherten Attributs, wobei der externen ID-Token einem Nutzer (102) zugeordnet ist, mit folgenden Schritten:
- Authentifizierung des Nutzers gegenüber dem externen ID-Token,
- Herstellung einer Verbindung zwischen dem externen ID-Token und einem ersten Computersystem (136) über das Mobilfunkgeräts (100) und das Mobilfunknetz (116),
- Authentifizierung des ersten Computersystems (136) gegenüber dem externen ID-Token,
- nach erfolgreicher Authentifizierung des Nutzers und des ersten Computersystems gegenüber dem externen ID-Token, Lesezugriff des ersten Computersystems auf das zumindest eine in dem externen ID-Token gespeicherte Attribut über die Verbindung,
- Verwendung des zumindest einen Attributs für das Einbuchen.

2. Verfahren nach Anspruch 1, wobei die Authentifizierung des ersten Computersystems gegenüber dem externen ID-Token mit Hilfe eines Zertifikats (144) des ersten Computersystems erfolgt, wobei das Zertifikat eine Angabe derjenigen in dem externen ID-Token gespeicherten Attribute beinhaltet, für welche das erste Computersystem für den Lesezugriff berechtigt ist.

3. Verfahren nach Anspruch 2, wobei dem externen ID-Token die Leseberechtigung des ersten Computersystems für den Lesezugriff auf zumindest eines der Attribute mit Hilfe des Zertifikats überprüft.

4. Verfahren nach einem der Ansprüche 1, 2 oder 3, mit folgenden weiteren Schritten:
- Signierung des zumindest einen aus dem externen ID-Token gelesenen Attributs durch das erste Computersystem,
- Übertragung des zumindest einen signierten Attributs von dem ersten Computersystem an ein zweites Computersystem (150; HLR 1, HLR 2, ...HLR i,.... HLR I), wobei das zweite Computersystem mit dem Mobilfunknetz gekoppelt ist, um das Einbuchen durchzuführen oder zu initieren.

5. Verfahren nach Anspruch 4, wobei es sich bei dem zweiten Computersystem um eine Mobilfunknetzkomponente des Mobilfunknetz handelt.

6. Verfahren nach Anspruch 4 oder 5, wobei das zumindest eine von dem ersten
Computersystem aus dem externen ID-Token gelesene Attribut an das Mobilfunkgerät gesendet wird, von wo es nach Freigabe durch den Nutzer an das zweite Computersystem weitergeleitet wird.

7. Verfahren nach Anspruch 6, wobei der Nutzer die Attribute vor der Weiterleitung an das zweite Computersystem durch weitere Daten ergänzen kann.

8. Verfahren nach einem der vorhergehenden Ansprüche, wobei es sich bei dem Mobilfunkgerät um ein Mobiltelefon mit einer Mobilfunk-Schnittstelle handelt.

9. Verfahren nach einem der vorausgehenden Ansprüche, wobei ein Datenbankzugriff auf eine Datenbank (158) durchgeführt wird, in der Identifikatoren gespeichert sind, wobei durch jeden der Identifikatoren ein Home Location Register identifiziert wird, wobei der Identifikator eines dem Nutzer zugeordneten Home Location Register (HLR 1, HLR 2, ...HLR i,.... HLR I) mit Hilfe des zumindest einen Attributs aus der Datenbank ausgelesen wird, und wobei das Einbuchen des Mobilfunkgeräts in dem durch den aus der Datenbank ausgelesenen Identifikator identifizierten Home Location Register durchgeführt wird,
wobei in der Datenbank die Telefonnummern der Nutzer gespeichert sind.

10. Verfahren nach einem der vorhergehenden Ansprüche, wobei ein erster Identifikator in dem Mobilfunkgerät gespeichert ist, und wobei dem Nutzer ein zweiter Identifikator zugeordnet ist, durch den ein Home Location Register identifiziert wird, und wobei mit Hilfe des zumindest einen Attributs geprüft wird, ob es sich bei dem ersten Identifikator um den zweiten Identifikator handelt, und wobei das Einbuchen in das durch die ersten und zweiten Identifikatoren identifizierte Home Location Register erfolgt, wenn die ersten und zweiten Identifikatoren übereinstimmen.

11. Verfahren nach einem der vorhergehenden Ansprüche, wobei es sich bei dem zumindest einen Attribut um einen Identifikator handelt, durch den ein Home Location Register identifiziert wird, wobei das Einbuchen des Mobilfunkgeräts in das durch den Identifikator identifizierte Home Location Register erfolgt.

12. Computerprogrammprodukt mit von einem Computersystem ausführbaren Instruktionen zur Durchführung eines Verfahrens nach einem der vorhergehenden Ansprüche.

13. Mobilfunksystem zum Einbuchen eines Mobilfunkgeräts (100) in ein
Mobilfunknetz (116) mit Hilfe zumindest eines in einem externen ID-Token (106) gespeicherten Attributs, wobei der externen ID-Token einem Nutzer (102) zugeordnet ist, mit
- Mittel (104, 108, 114, 138) zur Herstellung einer Verbindung zwischen dem externen ID-Token und einem ersten Computersystem (136) über das Mobilfunkgerät (100) und das Mobilfunknetz (116),
- Mitteln (142, 144, 146) zur Authentifizierung des ersten Computersystems (136) gegenüber dem externen ID-Token,
- Mitteln (138, 148) zur Durchführung eines Lesezugriffs des ersten Computersystems auf das zumindest eine in dem externen ID-Token gespeicherte Attribut über die Verbindung, wobei der Lesezugriff durchführbar ist, nachdem sich der Nutzer und das erste Computersystem gegenüber dem externen ID-Token authentifiziert haben,
- Mitteln (150) zur Verwendung des zumindest einen Attributs für das Einbuchen.

14. Mobilfunksystem nach Anspruch 13, wobei das erste Computersystem Mittel (144) zum Signieren des zumindest einen Attributs aufweist, und mit einer Netzwerkkomponente (150), die zum Empfang des zumindest einen signierten Attributs von dem ersten Computersystem ausgebildet ist, und
wobei die Netzwerkkomponente vorzugsweise eine Datenbank (158) aufweist, wobei in der Datenbank Identifikatoren gespeichert sind, wobei durch jeden der Identifikatoren ein Home Location Register (HLR 1, HLR 2, ...HLR i,.... HLR I) des Mobilfunknetzes identifiziert wird, wobei ein Lesezugriff auf einen dem Nutzer zugeordneten Identifikator mit Hilfe des zumindest einen Attributs durchführbar ist.

15. Mobilfunksystem nach Anspruch 13 oder 14 mit dem externen ID-Token mit:
- einem geschützten Speicherbereich (124) zur Speicherung von zumindest einem Attribut,
- Mitteln (120, 130) zur Authentifizierung eines dem externen ID-Token zugeordneten Nutzers (102) gegenüber dem externen ID-Token,
- Mitteln (134) zur Authentifizierung eines ersten Computersystems (136) gegenüber dem externen ID-Token,
- Mitteln (132) zum Aufbau einer geschützten Verbindung zu dem ersten Computersystem über ein Mobilfunkgerät, wobei das erste Computersystem das zumindest eine Attribut über die geschützte Verbindung auslesen kann,
wobei eine notwendige Voraussetzung für das Auslesen des zumindest einen Attributs aus dem externen ID-Token durch das erste Computersystem die erfolgreiche Authentifizierung des Nutzers und des ersten Computersystems gegenüber dem externen ID-Token ist, und wobei durch das zumindest eine Attribut ein Home Location Register (HLR 1, HLR 2, ...HLR i,.... HLR I) eines Mobilfunknetzes identifizierbar ist.

## Claims

1. A process for registering a piece of mobile telephony equipment (100) in a mobile telephony network (116) using at least one attribute that is stored in an external ID token (106) associated with a user (102), comprising the following steps:
- Authenticating the user with respect to the external ID token;
- Setting up a connection between the external ID token and a first computer system (136) over the piece of mobile telephony equipment (100) and the mobile telephony network (116);
- Authenticating the first computer system (136) with respect to the external ID token;
- After successful authentication of the user and the first computer system with respect to the external ID token, the first computer system performing a read access, over the connection, of the at least one attribute stored in the external ID token;
- Using the at least one attribute for registering.

2. The process according to claim 1, wherein the first computer system is authenticated with respect to the external ID token using a certificate (144) of the first computer system, the certificate indicating the attributes stored in the external ID token to which the first computer system has read access.

3. The process according to claim 2, wherein the external ID token checks the read permission of the first computer system for read access to at least one of the attributes using the certificate.

4. The process according to one of claims 1, 2, or 3, with the following further steps:
- Signing the at least one attribute read from the external ID token by the first computer system;
- Transferring the at least one signed attribute from the first computer system to a second computer system (150; HLR 1, HLR 2, ... HLR i, ... HLR I), the second computer system being coupled with the mobile telephony network to carry out or initiate the registering.

5. The process according to claim 4, wherein the second computer system is a mobile telephony network component of the mobile telephony network.

6. The process according to claim 4 or 5, wherein the at least one attribute read by the computer system from the external ID token is sent to the mobile telephony equipment, from where it is forwarded, after release by the user, to the second computer system.

7. The process according to claim 6, wherein the user can supplement the attributes with other data before they are forwarded to the second computer system.

8. The process according to one of the preceding claims, wherein the mobile telephony equipment is a mobile telephone with a mobile telephony interface.

9. The process according to one of the preceding claims, wherein a database (158) is accessed which stores identifiers, each of which identifies a Home Location Register, the identifier of a Home Location Register (HLR 1, HLR 2, ... HLR i, ... HLR I) associated with the user being read from the database using the at least one attribute, and the mobile telephony equipment being registered in the Home Location Register identified by the identifier read from the database;
wherein the telephone numbers of the users are stored in the database.

10. The process according to one of the preceding claims, wherein a first identifier is stored in the piece of mobile telephony equipment, and the user is associated with a second identifier which identifies a Home Location Register, and the at least one attribute is used to check whether the first identifier is the second identifier, and registering [the piece of mobile telephony equipment] into the Home Location Register identified by the first and second identifiers if the first and second identifiers agree.

11. The process according to one of the preceding claims, wherein the at least one attribute is an identifier that identifies a Home Location Register, the piece of mobile telephony equipment being registered into the Home Location Register identified by the identifier.

12. A computer program product with instructions that can be executed by a computer system to perform a process according to one of the preceding claims.

13. A mobile communications system for registering a piece of mobile telephony equipment (100) in a mobile telephony network (116) using at least one attribute stored in an external ID token (106) that is associated with a user (102), with:
- Means (104, 108, 114, 138) for setting up a connection between the external ID token and a first computer system (136) over the piece of mobile telephony equipment (100) and the mobile telephony network (116);
- Means (142, 144, 146) for authenticating the first computer system (136) with respect to the external ID token;
- Means (138, 148) for the first computer system to perform, over the connection, a read access of the at least one attribute stored in the external ID token, this read access becoming possible after the user and the first computer system have been authenticated with respect to the external ID token;
- Means (150) for using the at least one attribute for the registering.

14. The mobile communications system according to claim 13, wherein the first computer system has means (144) of signing the at least one attribute, and with a network component (150) that is designed to receive the at least one signed attribute from the first computer system; and
wherein the network component preferably has a database (158) that stores identifiers, each of which identifies a Home Location Register (HLR 1, HLR 2, ... HLR i, ... HLR I) of the mobile telephony network, an identifier associated with the user being read-accessible using the at least one attribute.

15. The mobile communications system according to claim 13 or 14 with the external ID token with:
- A protected memory area (124) for storing at least one attribute.
- Means (120, 130) for authenticating a user (102) associated with the external ID token, this authentication being carried out with respect to the external ID token;
- Means (134) for authenticating a first computer system (136) with respect to the external ID token;
- Means (132) for setting up a protected connection with the first computer system through a piece of mobile telephony equipment, the first computer system being able to read the at least one attribute over the protected connection,
a necessary condition for reading out the at least one attribute from the external ID token by the first computer system being the successful authentication of the user and the first computer system with respect to the external ID token, and a Home Location Register (HLR 1, HLR 2, ... HLR i, ... HLR I) of a mobile telephony network being identifiable on the basis of the at least one attribute.

## Revendications

1. Procédé pour l'enregistrement d'un appareil de radiotéléphonie mobile (100) dans un réseau de radiotéléphonie mobile (116) à l'aide d'au moins un attribut mémorisé dans un jeton d'identification externe (106), où le jeton d'identification externe est associé à un utilisateur (102), avec les étapes suivantes :
- authentification de l'utilisateur par rapport au jeton d'identification externe,
- établissement d'une liaison entre le jeton d'identification externe et un premier système informatique (136) par l'intermédiaire de l'appareil de radiotéléphonie mobile (100) et le réseau de radiotéléphonie mobile (116),
- authentification du premier système informatique (136) par rapport au jeton d'identification externe,
- après l'authentification réussie de l'utilisateur et du premier système informatique par rapport au jeton d'identification externe, accès en lecture du premier système informatique sur l'au moins un attribut mémorisé dans le jeton d'identification externe par l'intermédiaire de la liaison,
- utilisation de l'au moins un attribut pour l'enregistrement.

2. Procédé selon la revendication 1, dans lequel l'authentification du premier système informatique par rapport au jeton d'identification externe est effectuée à l'aide d'un certificat (144) du premier programme informatique, où le certificat contient une indication des attributs mémorisés dan le jeton d'identification externe pour lesquels le premier système informatique est habilité pour l'accès en lecture.

3. Procédé selon la revendication 2, dans lequel le jeton d'identification externe contrôle l'habilitation à l'accès en lecture du premier système informatique pour l'accès en lecture sur au moins l'un des attributs à l'aide du certificat.

4. Procédé selon l'une des revendications 1, 2 ou 3, avec les étapes de procédé suivantes :
- signature de l'au moins un attribut lu à partir du jeton d'identification externe par le premier système informatique,
- transfert de l'au moins un attribut signé du premier système informatique vers un deuxième système informatique (150 ; HLR 1, HLR 2, ...HLR i, ...HLRI), où le deuxième système informatique est couplé avec le réseau de radiotéléphonie mobile, afin d'exécuter ou d'initier l'enregistrement.

5. Procédé selon la revendication 4, dans lequel il s'agit d'un composant de réseau de radiotéléphonie mobile du réseau de radiotéléphonie mobile dans le cas du deuxième système informatique.

6. Procédé selon la revendication 4, ou 5, dans lequel l'au moins un attribut lu à partir du jeton d'identification externe par le système informatique est envoyé à l'appareil de radiotéléphonie mobile, d'où il est retransmis vers le deuxième système informatique après la libération par l'utilisateur.

7. Procédé selon la revendication 6, dans lequel l'utilisateur peut compléter les attributs de la retransmission vers le deuxième système informatique par d'autres données.

8. Procédé selon l'une des revendications précédentes, dans lequel il s'agit d'un téléphone mobile avec une interface de radiotéléphonie dans le cas de l'appareil de radiotéléphonie mobile.

9. Procédé selon l'une des revendications précédentes, dans lequel un accès à une banque de données est exécuté vers une banque de données (158), dans laquelle des identificateurs sont mémorisés, où, par chacun des identificateurs, un registre de localisation est identifié, où l'identificateur d'un registre de localisation (HLR 1, HLR 2, ...HLR i, ...HLR I) est lu à partir de la banque de données à l'aide de l'au moins un attribut, et où l'enregistrement de l'appareil de radiotéléphonie mobile est exécuté dans le registre de localisation identifié par l'identificateur sélectionné à partir de la banque de données,
où les numéros de téléphone des utilisateurs sont mémorisés dans la banque de données.

10. Procédé selon l'une des revendications précédentes, dans lequel un premier identificateur est mémorisé dans l'appareil de radiotéléphonie mobile, et dans lequel un deuxième identificateur est associé à l'identificateur, par lequel un registre de localisation est identifié, et dans lequel, à l'aide de l'au moins un attribut il est vérifié s'il s'agit du deuxième identificateur dans le cas du premier identificateur, et dans lequel l'enregistrement est effectué dans le registre de localisation identifié par les premier et deuxième identificateurs, lorsque les premier et deuxième identificateurs sont en accord.

11. Procédé selon l'une des revendications précédentes, dans lequel il s'agit d'un identificateur dans le cas de l'au moins un attribut, par lequel un registre de localisation est identifié, où l'enregistrement de l'appareil de radiotéléphonie mobile est effectué dans le registre de localisation identifié par l'identificateur.

12. Produit programme d'ordinateur avec des instructions exécutables par un système informatique pour la réalisation d'un procédé selon l'une des revendications précédentes.

13. Système radio mobile pour l'enregistrement d'un appareil de radiotéléphonie mobile (100) dans un réseau de radiotéléphonie mobile (116) avec l'aide d'au moins un attribut mémorisé dans un jeton d'identification externe (106), où le jeton d'identification est associé à un utilisateur (102), avec
- des moyens (104, 108, 114, 138) d'établissement d'une liaison entre le jeton d'identification externe et un premier système informatique (136) par l'intermédiaire d'un appareil de radiotéléphonie mobile (100) et le réseau de radiotéléphonie mobile (116),
- des moyens (142, 144, 146) pour l'authentification du premier système informatique (136) par rapport au jeton d'identification externe,
- des moyens (138, 148) pour l'exécution d'un accès en lecture du premier système informatique sur l'au moins un attribut mémorisé dans le jeton d'identification externe par l'intermédiaire d'une liaison, où l'accès en lecture peut être exécuté après que l'utilisateur et le premier système informatique se soient authentifiés par rapport au jeton d'identification externe,
- des moyens (150) pour l'utilisation de l'au moins un attribut pour l'enregistrement.

14. Système de radiotéléphonie mobile selon la revendication 13, dans lequel le premier système informatique présente des moyens (144) pour la signature de l'au moins un attribut, et avec un composant de réseau (150) qui est conçu pour la réception de l'au moins un attribut signé du premier système informatique, et
dans lequel le composant de réseau présente de préférence une banque de données (158), où des identificateurs sont mémorisés dans la banque de données, où, par chacun des identificateurs, un registre de localisation (HLR 1, HLR 2, ...HLRi, ... HLR I) du réseau de radiotéléphonie mobile est identifié, où un accès en lecture est exécutable suite à un identificateur associé à l'utilisateur à l'aide de l'au moins un attribut.

15. Système de radiotéléphonie mobile selon la revendication 13, ou 14, avec le jeton d'identification externe avec :
- un domaine de mémoire (124) protégé pour la mémorisation d'au moins un attribut,
- des moyens (120, 130) pour l'authentification d'un utilisateur (102) associé au jeton d'identification externe,
- des moyens (134) pour l'authentification d'un premier système informatique (136) par rapport au jeton d'identification externe,
- des moyens (132) pour l'établissement d'une liaison sécurisée vers le premier système informatique par l'intermédiaire d'un appareil de radiotéléphonie mobile, où le premier système informatique peut lire l'au moins un attribut par la liaison sécurisée,
où une condition préalable nécessaire pour la lecture de l'au moins un attribut à partir du jeton d'identification externe par le premier système informatique est l'authentification réussie de l'utilisateur et du premier système informatique par rapport au jeton d'identification externe, et où un registre de localisation (HLR 1, HLR 2, ...HLRi, ...HLR I) d'un réseau de radiotéléphonie mobile est identifiable par l'au moins un attribut.
